# EUROPEAN PATENT APPLICATION

(11) **EP 4 192 066 A1**
(43) Date of publication of application: **07.06.2023**
(21) Application number: 20947703.3
(22) Date of filing: 28.07.2020
(51) Int. Cl.: H04W 16/14, H04W 74/02

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: KUMAGAI, Shinya, Tokyo 100-6150 (JP); TAKAHASHI, Yuki, Tokyo 100-6150 (JP); NAGATA, Satoshi, Tokyo 100-6150 (JP)
(74) Representative: Hoffmann Eitle
(86) International application number: PCT/JP2020/028920
(87) International publication number: WO 2022/024224

(57) **Abstract**

A terminal according to an aspect of the present disclosure includes a receiving section configured to receive information on channel occupancy time (COT) in a semi-static channel access procedure, and a control section configured to control initiative of the COT based on the information on the COT. According to one aspect of the present disclosure, radio communication in an NR-Unlicensed (U) system can be appropriately controlled.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). In addition, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In future radio communication systems (for example, 5G, 5G+, New Radio (NR), and 3GPP Rel. 16 or later), the use of an unlicensed band (which may also be referred to as an NR-Unlicensed (U) system) is considered similarly to an existing radio communication system (for example, before 3GPP Rel. 15).

In addition, introduction of a downlink control information (DCI) format (for example, DCI format 0_2 and DCI format 1_2) for a traffic type such as high-reliability and low-latency communication (for example, ultra-reliable and low-latency communications (URLLC)) in future radio communication systems (for example, 5G, 5G+, New Radio (NR), and 3GPP Rel. 16 or later) has been studied.

However, in uplink communication in a traffic type such as URLLC, a channel occupancy time (COT) of a user equipment (UE)-initiated (UE-initiated) for frame-based equipment (FBE) is not sufficiently studied.

Therefore, an object of the present disclosure is to provide a terminal, a radio communication method, and a base station capable of appropriately controlling radio communication in an NR-U system.

### Solution to Problem

A terminal according to an aspect of the present disclosure includes a receiving section configured to receive information on channel occupancy time (COT) in a semi-static channel access procedure, and a control section configured to control initiative of the COT based on the information on the COT.

### Advantageous Effects of Invention

According to one aspect of the present disclosure, radio communication in an NR-Unlicensed (U) system can be appropriately controlled.

### Brief Description of Drawings

Fig. 1 is a diagram illustrating an example of a base station-initiated COT in Rel. 16.
Fig. 2 is a diagram illustrating an example of a UE-initiated COT.
Fig. 3 is a diagram illustrating another example of the UE-initiated COT.
Fig. 4 is a diagram illustrating another example of the UE-initiated COT.
Fig. 5 is a diagram illustrating another example of the UE-initiated COT.
Fig. 6 is a diagram illustrating an example of a schematic configuration of a radio communication system according to one embodiment.
Fig. 7 is a diagram illustrating an example of a configuration of a base station according to one embodiment.
Fig. 8 is a diagram illustrating an example of a configuration of a user terminal according to one embodiment.
Fig. 9 is a diagram illustrating an example of a hardware configuration of the base station and the user terminal according to one embodiment.

### Description of Embodiments

### (Service (Traffic Type))

Future radio communication systems (for example, New Radio (NR)) are expected to involve traffic types (which may also be referred to as types, services, service types, communication types, or use cases) such as an enhanced mobile broadband (eMBB), machine type communications configured to embody multiple simultaneous connection (for example, massive machine type communications (mMTC), Internet of Things (IoT), and high-reliability and low-latency communication (for example, ultra-reliable and low-latency communications (URLLC)). For example, it is required that URLLC have smaller latency and higher reliability than eMBB.

The traffic type may be identified in a physical layer based on at least one of the followings:
· Logical channels with different priorities
· Modulation and coding scheme (MCS) table (MCS index table)
· Channel quality indication (CQI) table
· DCI format
· System information-radio network temporary identifier (RNTI) used for scrambling (masking) of cyclic redundancy check (CRC) bit included in (added to) DCI (DCI format)
· Radio resource control (RRC) parameter
· Specific RNTI (for example, RNTI for URLLC, MCS-C-RNTI, or the like)
· Search space
· Predetermined field in DCI (for example, newly added field or reuse of existing field)

Specifically, a traffic type of hybrid automatic repeat request acknowledgement (HARQ-ACK) for a physical downlink shared channel (PDSCH) (or physical uplink control channel (PUCCH)) may be determined based on at least one of the followings.
· MCS index table used to determine at least one of the modulation order, target code rate, and transport block size (TBS) of the PDSCH (for example, whether or not to use MCS index table 3)
· RNTI used for CRC scrambling of DCI used for scheduling the PDSCH (for example, whether CRC scrambled with C-RNTI or MCS-C-RNTI)
   - Priority that is configured by higher layer signaling

In the present disclosure, the higher layer signaling may be any of, for example, radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The physical layer signaling may be, for example, downlink control information (DCI).

The traffic type may be associated with communication requirements (requirements and required conditions such as latency and error rate), a data type (voice, data, and the like), or the like.

A difference between URLLC requirements and eMBB requirements may be that URLLC is lower in latency than eMBB or that URLLC requirements include reliability requirements.

For example, eMBB user (U)-plane latency requirements may include that downlink U-plane latency is 4 ms and that uplink U-plane latency is 4 ms. Meanwhile, URLLC U-plane latency requirements may include that downlink U-plane latency is 0.5 ms and that uplink U-plane latency is 0.5 ms. Furthermore, the URLLC reliability requirements may include that a 32-byte error rate is 10-5 for a U-plane latency of 1 ms.

Further, enhancement of the reliability of traffic for unicast data is mainly studied as enhanced ultra reliable and low latency communications (eURLLC). Hereinafter, in a case where URLLC and eURLLC are not distinguished, they are simply referred to as URLLC.

In NR Rel. 16 and beyond, configuring priorities at a plurality of levels (for example, two levels) for a predetermined signal or channel is being studied. For example, it is assumed that communication is controlled (for example, transmission control at the time of collision, and the like) by configuring different priorities for every signal or channel each corresponding to different traffic types (which may also be referred to as services, service types, communication types, use cases, and the like). This makes it possible to control communication by configuring, for the same signal or channel, different priorities depending on a service type or the like.

The priority may be configured for a signal (for example, uplink control information (UCI) such as HARQ-ACK and reference signal), a channel (PDSCH, physical uplink shared channel (PUSCH), or the like), a HARQ-ACK codebook, or the like. The priority may be defined by a first priority (for example, high) and a second priority (for example, low) that is lower than the first priority. Alternatively, three or more types of priorities may be configured. Notification of the information on the priority may be provided from a base station to the UE using at least one of higher layer signaling and DCI.

For example, priorities may be respectively configured for HARQ-ACK for a PDSCH that is dynamically scheduled, HARQ-ACK for a semi-persistent PDSCH (semi-persistent scheduling (SPS) PDSCH), and HARQ-ACK for SPS PDSCH release. Alternatively, priorities may be respectively configured for HARQ-ACK codebooks corresponding to these HARQ-ACKs. Note that, in a case where a priority is configured for a PDSCH, the priority of the PDSCH may be replaced with a priority of HARQ-ACK for the PDSCH.

The UE may control UL transmission based on the priorities in a case where different UL signals or UL channels collide with each other. For example, control may be performed in such a manner that UL transmission having a high priority is performed and that UL transmission having a low priority is not performed (for example, dropped). Alternatively, a transmission timing of UL transmission having a low priority may be changed (for example, to defer or to shift).

The collision between different UL signals/UL channels may be a case where time resources (or time resources and frequency resources) of the different UL signals or UL channels overlap with each other or a case where transmission timings of the different UL signals or UL channels overlap with each other.

In a case where notification of the priorities is provided using the DCI, whether or not a bit field (for example, priority indicator) for providing notification of the priority to the DCI is configured may be provided in notification or configured from a base station to the UE using higher layer signaling. In addition, in a case where no bit field for providing notification of the priority to the DCI is included, the UE may determine that the priority of the PDSCH (or HARQ-ACK corresponding to the PDSCH) scheduled by the DCI is a specific priority (for example, low).

### (Unlicensed Band)

In an unlicensed band (for example, 2.4 GHz band, 5 GHz band, or 6 GHz band), since it is assumed that a plurality of systems such as a Wi-Fi system and a system (licensed-assisted access (LAA) system) supporting LAA coexist, it is necessary to avoid collision of transmissions and/or control interference between the plurality of systems.

In LAA of the existing LTE system (for example, Rel. 13), data transmitting apparatus performs listening for confirming the presence or absence of transmission of other pieces of apparatus (for example, base station, user terminal, Wi-Fi device, and the like) before transmission of data in the unlicensed band. The listening may be referred to as listen before talk (LBT), clear channel assessment (CCA), carrier sense, channel sensing, sensing, a channel access procedure, a shared spectrum channel access procedure, energy detection (ED), or the like.

The transmitting apparatus may be, for example, a base station in downlink (DL) (for example, gNodeB (gNB), which may also be referred to as network (NW)), or may be a user equipment (UE) in uplink (UL). Further, a receiving apparatus that receives data from the transmitting apparatus may be, for example, a user terminal in DL and a base station (NW) in UL.

In the LAA of the existing LTE system, the transmitting apparatus starts data transmission after a predetermined period (for example, immediately after or after back-off period) after it is detected that there is no transmission from other pieces of apparatus in the LBT (idle state).

The use of an unlicensed band is also studied in a future radio communication system (for example, 5G, 5G+, New Radio (NR), or 3GPP Rel. 15 or later). An NR system using an unlicensed band may be referred to as an NR-unlicensed (U) system, an NR LAA system, or the like.

It is possible that dual connectivity (DC) between a licensed band and an unlicensed band, stand-alone (SA) of an unlicensed band, or the like be included in the NR-U.

A node (for example, base station or UE) in NR-U confirms that a channel is idle by the LBT for coexistence with other systems or other operators and then starts transmission.

In an NR-U system, a base station (for example, gNB) or a UE obtains a transmission opportunity (TxOP) and performs transmission when an LBT result is idle. The base station or the UE does not perform transmission when the LBT result is busy (LBT-busy). A transmission opportunity time may be referred to as a channel occupancy time (COT).

Note that the LBT-idle may be replaced with LBT success. LBT-busy may be replaced with LBT failure.

### (FBE/LBE)

In a future radio communication system (for example, NR Rel. 16 and beyond), it is considered that the UE performs the LBT based on a plurality of LBT types. As a mechanism of the LBT, frame-based equipment (FBE) or load-based equipment (LBE) may be used.

The FBE may indicate an LBT mechanism having a fixed frame cycle, wherein the LBT mechanism performs sensing with some resources thereof, performs transmission when a channel is available, and waits without performing transmission until the next sensing timing when the channel is unavailable.

In NR Rel. 16 and beyond, when a specific higher layer parameter (for example, Channel Access Mode-r16) is provided to the UE, and the specific higher layer parameter satisfies a specific condition (for example, Channel Access Mode-r16 = semistatic is configured), the NW and the UE may perform LBT based on the FBE. The LBT based on the FBE may be referred to as semi-static LBT.

On the other hand, the LBE may indicate an LBT mechanism in which a sensing period is extended and sensing is continuously performed until a channel becomes available in a case where the channel becomes unavailable as a result of performing sensing.

In NR Rel. 16 and beyond, when a specific higher layer parameter (for example, Channel Access Mode-r16) is provided to the UE, and the specific higher layer parameter satisfies a specific condition (for example, Channel Access Mode-r16 = dynamic is configured, or Channel Access Mode-r16 is not designated), the NW and the UE may perform LBT based on the LBE.

The LBT based on the LBE may be referred to as dynamic LBT. The LBT based on the LBE may be distinguished by a LBT type. The LBT type may be referred to as a channel access type, a channel access mode, a shared channel access type, or the like.

In NR Rel. 16 and beyond, the channel access type may be distinguished into any one of types: Type 1, Type 2A, Type 2B, and Type 2C.

The name of the channel access type is not limited thereto. As the name of the channel access type, for example, in "channel access type X", X may be an any number, an alphabetical character, or a combination of a number and an alphabetical character, or may be another name.

Type 1 channel access may be channel access with a variable transmission waiting time (contention window size (CWS)) in accordance with random back-off. The type 1 channel access may be a channel access type used in a coexistence environment with another unlicensed band (for example, Wi-Fi) .

In the Type 1 channel access, a terminal (including terminal in another radio telecommunication specification)/gNB may perform sensing in a specific period before transmission of a signal. The specific period may include at least an extension period (which may also be referred to as defer duration) (for example, 43 µs) and a sensing slot (for example, 9 µs).

In the Type 1 channel access, a specific counter (timer) may be configured for the terminal/gNB, and when the counter expires (value of counter becomes 0), signal transmission may be allowed.

The counter may decrease every time one sensing slot (for example, 9 µs) elapses. In a case where signal transmission by a terminal/gNB other than the terminal/gNB is detected (LBT busy), the counter configured for the terminal/gNB may stop in a specific period (period during which signal is transmitted). The counter may be started again after the specific period (period during which signal is transmitted) elapses.

In a case where values of counters configured to a plurality of terminals/gNBs become 0 at a certain moment and signal transmissions by the plurality of terminals/gNBs overlap each other, CWSs of the terminals may be increased.

Type 2A channel access may be channel access without the random back-off. In the Type 2A channel access, a first period (for example, period of 25 µs (which may also be referred to as sensing interval, gap, or the like)) including a period during which sensing is performed may be configured, and the UE may perform sensing in the period. In the case of LBT idle in the sensing, the UE may perform signal transmission immediately after the period elapses.

Type 2B channel access may be channel access without the random back-off. In the Type 2B channel access, a second period (for example, period of 16 µs) including a period during which sensing is performed may be configured, and the UE may perform sensing in the period. In the case of LBT idle in the sensing, the UE may perform signal transmission immediately after the period elapses.

The Type 2C channel access may be channel access in which a period equal to or shorter than the first period or the second period (for example, 16 µs) is configured for the UE, but sensing is not performed in the period. The UE may perform signal transmission in a predetermined period (for example, period of up to 584 µs) immediately after the period elapses.

Cyclic prefix (CP) extension may be configured to control a period during which sensing is performed in each channel access type. The CP extension may be indicated by a specific time corresponding to a CP extension index. The specific time may be at least one of 25 µs, 16+T_{TA} µs, or 25+T_{TA} µs, in which T_{TA} represents a timing advance.

The UE may receive information on the channel access type and the instruction of the CP extension based on at least one of higher layer signaling and physical layer signaling.

In the LBT based on the FBE prior to Rel. 16, the base station and the UE transmit and receive uplink (UL)/downlink (DL) signals/channels using a base station-initiated (gNB-initiated) COT. The base station-initiated COT may be a COT obtained as a result of sensing performed by a certain base station (NW).

Prior to Rel. 16, the base station-initiated COT may be included in a fixed frame period (FFP). The FFP may be referred to as periodic channel occupancy (PCO). The starting position of the FFP for every two consecutive radio frames may coincide (be aligned) with the starting position of a specific (for example, even number of indices) radio frame.

The period of the FFP may be configured/notified to the UE by higher layer signaling. The higher layer signaling may be system information block 1 (SIB1) signaling/RRC signaling. The higher layer parameter configured/notified by the higher layer signaling may be semistatic channel access config. The period may be determined from, for example, 1 ms, 2 ms, 2.5 ms, 4 ms, 5 ms, and 10 ms.

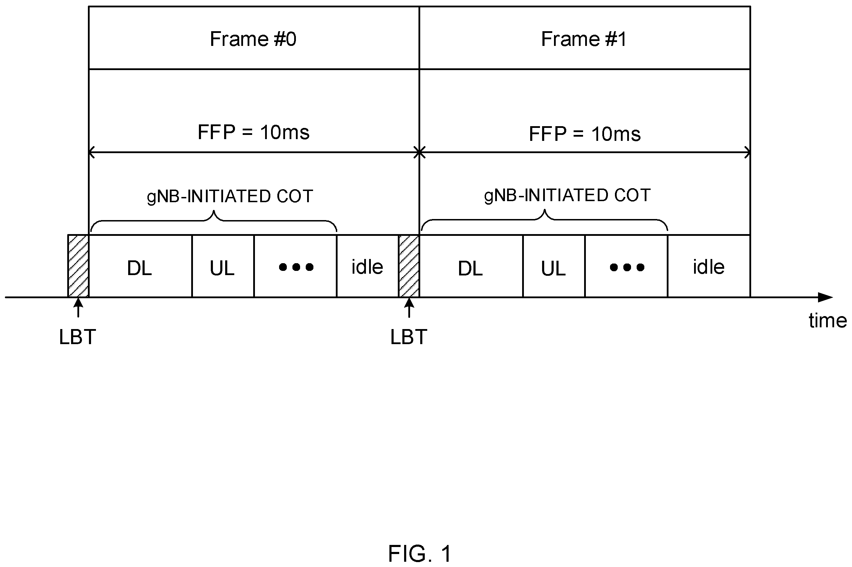

Fig. 1 is a diagram illustrating an example of a base station-initiated COT in Rel. 16. The base station (gNB) performs sensing in a specific period (for example, which may be referred to as sensing slot) immediately before the start of the FFP. The FFP includes a COT, a specific idle period during which signal/channel transmission/reception is not performed, and a period during which sensing is performed (sensing slot).

As a result of the sensing, when the LBT is successful, the gNB obtains COT (gNB-initiated COT). The COT is included in the FFP (here, period of 10 ms), and a starting position of the COT is aligned with a starting position of the FFP. The starting position of the FFP is aligned with the starting position of each radio frame (here, frame #0 and frame #1). The gNB transmits DL signal/channel and UL signal/channel in the obtained COT.

In the gNB-initiated COT, the gNB may first transmit the DL signal/channel. In other words, in the gNB-initiated COT, the UE may first receive the DL signal/channel.

Meanwhile, in order to further advance highly reliable and low latency communication (for example, traffic type such as URLLC) in a future radio communication system (for example, NR after Rel. 17), introduction of UE-initiated COT for the FBE has been studied. However, the UE-initiated COT has not been sufficiently studied.

Specifically, the starting position and cycle (period) of the FFP related to the UE-initiated COT have not been sufficiently studied. In addition, the UE-initiated COT configuration/instruction method (for example, cell-specific or UE-specific configuration/instruction, configuration/instruction common for all UL signals/channels or per UL signal/channel) has not been sufficiently studied.

In a case where such study has not been sufficiently conducted, when a traffic type such as URLLC is operated in the NR-U system, reduction in throughput or a degradation in communication quality may be caused.

Therefore, the present inventors have conceived a method of configuring the FFP including the UE-initiated COT when a traffic type such as URLLC is operated in the NR-U system.

Hereinafter, embodiments according to the present disclosure will be described in detail with reference to the drawings. The radio communication methods according to the embodiments may be applied alone or in combination.

In the present disclosure, "A/B" may be replaced with at least one of A and B, and "A/B/C" may be read as at least one of A, B, and C.

In the present disclosure, the gNB-initiated COT may be referred to as a first COT, a semi-static COT in the FBE, or the like. Furthermore, in the present disclosure, an FFP for the gNB-initiated COT may be referred to as an FFP for the first COT, an FFP included in the first COT, a first FFP, an FFP for the semi-static COT in the FBE, or the like.

In the present disclosure, the UE-initiated COT may be referred to as a second COT, a dynamic COT in the FBE, or the like. In addition, in the present disclosure, an FFP for the UE-initiated COT may be referred to as an FFP for the second COT, an FFP included in the second COT, a second FFP, an FFP for the dynamic COT in the FBE, or the like.

### (Radio Communication Method)

### <First Embodiment>

In a first embodiment, a starting position and a cycle (period) of the second FFP will be described. The starting position and the cycle (period) of the second FFP may be determined according to at least one of the following embodiments 1-1 to 1-4.

### [Embodiment 1-1]

The starting position and the cycle (period) of the second FFP may be determined based on the first FFP. For example, the starting position and the cycle of the second FFP in a specific period (for example, specific frame) may be the same as the starting position and the cycle of the first FFP in the specific period. In other words, the UE may transmit and receive the signal/channel in the COT included in the second FFP having the same starting position and cycle as those of the first FFP.

At this time, the starting position of the second FFP for each of N (for example, N = 2) consecutive radio frames may be aligned with a starting position of a specific (for example, even number of indices) radio frame.

Furthermore, the information on a period of the second FFP may be configured/notified to the UE by a higher layer parameter (for example, semi static channel access config) by higher layer signaling (SIB1 signaling/RRC signaling). The period may be determined from, for example, 1 ms, 2 ms, 2.5 ms, 4 ms, 5 ms, and 10 ms, may be represented by an integral multiple of a specific period (for example, slot, subslot, symbol, and subframe), or may be represented by any time.

Additionally, the UE may also receive the information on the period of the second FFP based on a specific field included in a DCI that schedules the transmission of the UL signal/channel in the second COT. The DCI may be a DCI included in the first COT.

In addition, a set (list) of information on the period of the second FFP may be notified/configured to the UE by higher layer signaling. Additionally, the UE may also select (determine), from the set, the information on the period of the second FFP to be applied to the second COT based on a specific field included in the DCI that schedules the transmission of the UL signal/channel in the second COT. The DCI may be a DCI included in the first COT.

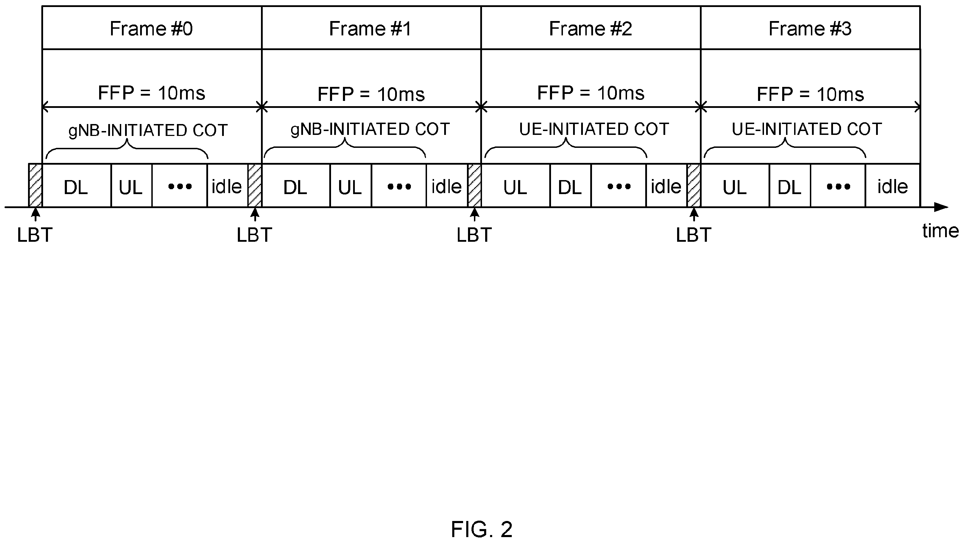

Fig. 2 is a diagram illustrating an example of the UE-initiated COT. In the example of Fig. 2, the first FFP (FFP for gNB-initiated COT) is included in a frame #0 and a frame #1, and the second FFP (FFP for UE-initiated COT) is included in a frame #2 and a frame #3. The first FFP in the frame #0 and the frame #1 in Fig. 2 is the same as that in Fig. 1. The gNB may also obtain the first COT in the frame #2 and the frame #3, and the first FFP in the frame #2 and the frame #3 may be the same as the first FFP in the frame #0 and the frame #1.

In the example illustrated in Fig. 2, the cycle (period) of the first FFP is configured to 10 ms. The cycle (period) of the second FFP in Fig. 2 is also configured to 10 ms.

The UE performs channel sensing in a specific period immediately before the frame #2 and a specific period immediately before the frame #3. When the sensing is successful, the UE may transmit and receive the signal/channel immediately after the sensing. After transmitting and receiving the signal/channel, the UE may perform channel sensing through a specific idle period.

Note that, in the present disclosure, in the UE-initiated COT, the UE may first transmit the UL signal/channel. For example, the UL may be configured (or UL transmission is scheduled) in the head symbol of the UE-initiated COT.

Note that, in the present disclosure, whether or not the UE initiates the COT may be determined by the UE for transmission of the UL signal/channel (for example, at least one of CG-PUSCH, SR, and PRACH) depending on an internal status of the UE. For the transmission of channels other than the UL signal/channel, the UE may initiate the COT based on the configuration/instruction by the base station.

Note that, in the diagram illustrating the configuration of the COT of the present disclosure, the length and arrangement of the FFP, the COT, the radio frame, the period used for transmission and reception of signal/channel, and the like are merely examples, and the present disclosure is not limited thereto. For example, the number of frames in which the first COT is configured and the number of frames in which the second COT is configured may be the same or different.

According to the embodiment 1-1, it is possible to simplify implementation on the UE without requiring setting/configuration to be newly added to the UE.

### [Embodiment 1-2]

The starting position of the second FFP may be determined based on the first FFP. For example, the starting position of the second FFP may be the same as the starting position of the first FFP. In other words, the UE may transmit and receive the signal/channel in the COT included in the second FFP having the same starting position as that of the first FFP.

At this time, the starting position of the second FFP for each of N (for example, N = 2) consecutive radio frames may be aligned with a starting position of a specific (for example, even number of indices) radio frame.

At this time, the information on the period of the second FFP may be configured/notified to the UE by parameters (for example, parameters other than semi static channel access config) other than specific higher layer parameters by higher layer signaling (SIB1 signaling/RRC signaling). The period may be determined from, for example, 1 ms, 2 ms, 2.5 ms, 4 ms, 5 ms, and 10 ms, may be represented by an integral multiple of a specific period (for example, slot, subslot, symbol, and subframe), or may be represented by any time. The period may be a value different from a period of the first FFP configured by a specific higher layer parameter (for example, semi-static channel access config).

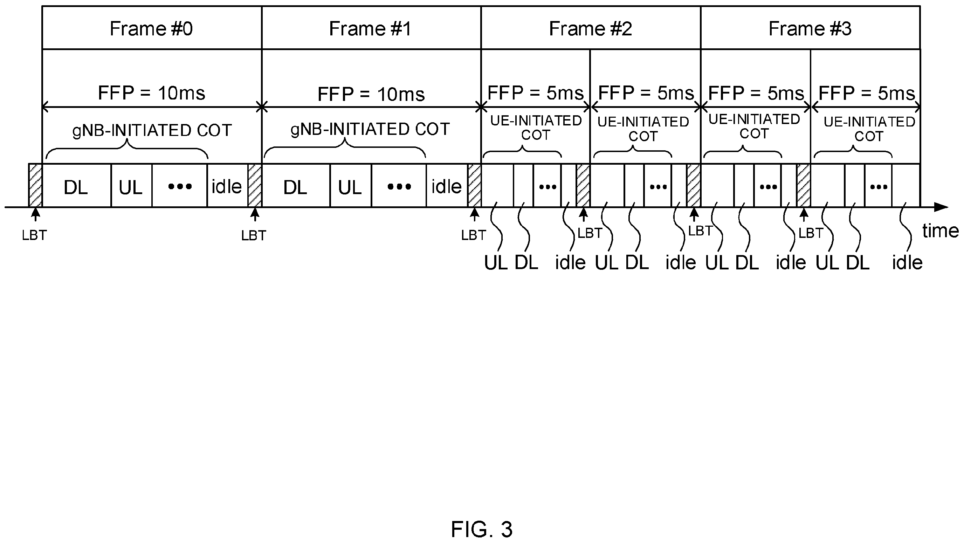

Fig. 3 is a diagram illustrating another example of the UE-initiated COT. In the example of Fig. 3, the first FFP (FFP for gNB-initiated COT) is included in the frame #0 and the frame #1, and the second FFP (FFP for UE-initiated COT) is included in the frame #2 and the frame #3. The first FFP in Fig. 3 is the same as that in Fig. 2.

In the example illustrated in Fig. 3, the cycle (period) of the second FFP is configured to 5 ms by the UE using a specific higher layer parameter. The UE performs channel sensing in a specific period immediately before the start of each FFP included in the frame #2 and the frame #3. When the sensing is successful, the UE may transmit and receive the signal/channel immediately after the sensing. After transmitting and receiving the signal/channel, the UE may perform channel sensing through a specific idle period.

According to the embodiment 1-2, more flexible transmission and reception of the UL signal/channel becomes possible, and higher communication reliability can be ensured.

### [Embodiment 1-3]

The cycle (period) of the second FFP may be determined based on the first FFP. For example, the cycle (period) of the second FFP may be the same as the cycle of the first FFP. In other words, the UE may transmit and receive the signal/channel in the COT included in the second FFP having the same cycle as that of the first FFP.

At this time, the starting position of the second FFP for each of N (for example, N = 2) consecutive radio frames may be aligned with a starting position of a specific (for example, even number of indices) radio frame.

At this time, information on the starting position of the second FFP may be configured/notified to the UE by a specific higher layer parameter by higher layer signaling (SIB1 signaling/RRC signaling). The specific higher layer parameter may be information indicating a time (offset) from a specific reference point (for example, starting position of certain radio frame) to the starting position of the second FFP. The offset may be determined from, for example, a value such as 1 ms, 2 ms, 2.5 ms, 4 ms, or 5 ms, may be represented by an integral multiple of a specific period (for example, slot, subslot, symbol, and subframe), or may be represented by any time.

Additionally, the UE may also receive the information on the starting position of the second FFP based on a specific field included in a DCI that schedules the transmission of the UL signal/channel in the second COT. The DCI may be a DCI included in the first COT.

In addition, a set (list) of information on the starting position of the second FFP may be notified/configured to the UE by higher layer signaling. Additionally, the UE may also select (determine), from the set, the information on the starting position of the second FFP to be applied to the second COT based on a specific field included in the DCI that schedules the transmission of the UL signal/channel in the second COT. The DCI may be a DCI included in the first COT.

The embodiment 1-3 may be applied when the gNB fails in the LBT in the FFP included in a certain radio frame. That is, the UE may determine whether to obtain the second COT based on the success/failure of the LBT by the gNB. Further, the embodiment 1-3 may also be applied regardless of the success/failure of the LBT by the gNB.

The UE may implicitly determine the failure of the LBT by the gNB. For example, when the UE does not receive the DL signal/channel from the gNB in a certain frame, it may be determined that the LBT by the gNB fails. When the UE makes a determination in this manner, the UE may perform a control operation to obtain the second COT after a specific period (offset) from the starting position of the certain frame.

The gNB may implicitly determine the failure of the LBT by the UE. For example, when the gNB does not receive a UE signal/channel from the UE in the second COT in a certain frame, it may be determined that the LBT by the UE fails. When the gNB makes a determination in this manner, the gNB may perform a control operation to obtain the first COT at the starting position of the next frame of the certain frame.

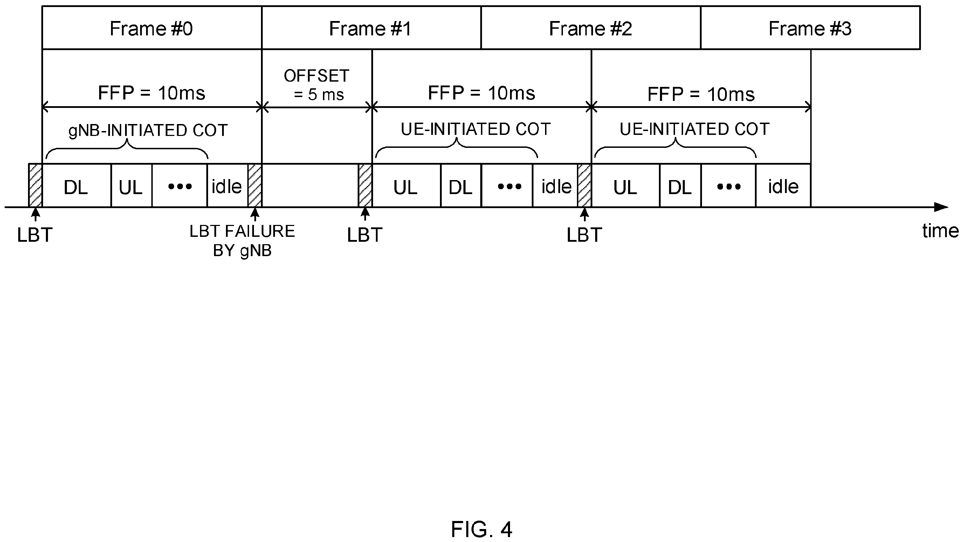

Fig. 4 is a diagram illustrating another example of the UE-initiated COT. In the example of Fig. 4, the first FFP (FFP for gNB-initiated COT) is included in the frame #0, and the second FFP (FFP for UE-initiated COT) is included in the frame #1, the frame #2, and the frame #3. The first FFP in Fig. 4 is the same as that in Fig. 2.

In the example illustrated in Fig. 4, the offset (here, 5 ms) of the starting position of the second FFP is configured/notified to the UE by a specific higher layer parameter (information on starting position of second FFP). The UE obtains the second COT 0.5 ms after the starting position of the frame #1. As the cycle of the second FFP, the cycle of the first FFP (here, 10 ms) is applied. The UE performs channel sensing in a specific period immediately before the start of the second COT. When the sensing is successful, the UE may transmit and receive the signal/channel immediately after the sensing. After transmitting and receiving the signal/channel, the UE may perform channel sensing through a specific idle period.

In the example illustrated in Fig. 4, the cycle (period) of the second FFP may be the same as the cycle (period) of the first FFP. The information on the period of the second FFP may be configured/notified to the UE by a higher layer parameter (for example, semi static channel access config) by higher layer signaling (SIB1 signaling/RRC signaling). The period may be determined from, for example, 1 ms, 2 ms, 2.5 ms, 4 ms, 5 ms, and 10 ms, may be represented by an integral multiple of a specific period (for example, slot, subslot, symbol, and subframe), or may be represented by any time.

According to the embodiment 1-3, after the LBT failure by the UE/gNB, communication can be restarted more quickly.

### [Embodiment 1-4]

The starting position and the cycle (period) of the second FFP may be determined independently of the first FFP. For example, the starting position and the cycle of the second FFP may be different from the starting position and the cycle of the first FFP. In other words, the UE may transmit and receive the signal/channel in the COT included in the second FFP having the starting position and the cycle different from those of the first FFP.

At this time, the starting position of the second FFP for each of N (for example, N = 2) consecutive radio frames may be aligned with a starting position of a specific (for example, even number of indices) radio frame.

At this time, information on the starting position of the second FFP may be configured/notified to the UE by a specific higher layer parameter by higher layer signaling (SIB1 signaling/RRC signaling). The specific higher layer parameter may be information indicating an offset from a starting position of a certain radio frame. The offset may be determined from, for example, a value such as 1 ms, 2 ms, 2.5 ms, 4 ms, or 5 ms, may be represented by an integral multiple of a specific period (for example, slot, subslot, symbol, and subframe), or may be represented by any time.

Additionally, the UE may also receive the information on the starting position of the second FFP based on a specific field included in a DCI that schedules the transmission of the UL signal/channel in the second COT. The DCI may be a DCI included in the first COT.

In addition, a set (list) of information on the starting position of the second FFP may be notified/configured to the UE by higher layer signaling. Additionally, the UE may also select (determine), from the set, the information on the starting position of the second FFP to be applied to the second COT based on a specific field included in the DCI that schedules the transmission of the UL signal/channel in the second COT. The DCI may be a DCI included in the first COT.

At this time, the information on the period of the second FFP may be configured/notified to the UE by parameters (for example, parameters other than semi static channel access config) other than specific higher layer parameters by higher layer signaling (SIB1 signaling/RRC signaling). The period may be determined from, for example, 1 ms, 2 ms, 2.5 ms, 4 ms, 5 ms, and 10 ms, may be represented by an integral multiple of a specific period (for example, slot, subslot, symbol, and subframe), or may be represented by any time. The period may be a value different from a period of the first FFP configured by a specific higher layer parameter (for example, semi-static channel access config).

Additionally, the UE may also receive the information on the period of the second FFP based on a specific field included in a DCI that schedules the transmission of the UL signal/channel in the second COT. The DCI may be a DCI included in the first COT.

In addition, a set (list) of information on the period of the second FFP may be notified/configured to the UE by higher layer signaling. Additionally, the UE may also select (determine), from the set, the information on the period of the second FFP to be applied to the second COT based on a specific field included in the DCI that schedules the transmission of the UL signal/channel in the second COT. The DCI may be a DCI included in the first COT.

The information on the starting position of the second FFP and the information on the period of the second FFP may be included in the same higher layer parameter information element. In addition, the information on the starting position of the second FFP and the information on the period of the second FFP may be included in different higher layer parameter information elements. The UE may implicitly determine at least one of the information on the starting position of the second FFP and the information on the period of the second FFP from another parameter.

The embodiment 1-4 may be applied when the gNB fails in the LBT in the FFP included in a certain radio frame, similarly to the embodiment 1-3. That is, the UE may determine whether to obtain the second COT based on the success/failure of the LBT by the gNB. Further, the embodiment 1-3 may also be applied regardless of the success/failure of the LBT by the gNB.

The UE may implicitly determine the failure of the LBT by the gNB. For example, when the UE does not receive the DL signal/channel from the gNB in a certain frame, it may be determined that the LBT by the gNB fails. When the UE makes a determination in this manner, the UE may perform a control operation to obtain the second COT after a specific period (offset) from the starting position of the certain frame.

The gNB may implicitly determine the failure of the LBT by the UE. For example, when the gNB does not receive a UE signal/channel from the UE in the second COT in a certain frame, it may be determined that the LBT by the UE fails. When the gNB makes a determination in this manner, the gNB may perform a control operation to obtain the first COT at the starting position of the next frame of the certain frame.

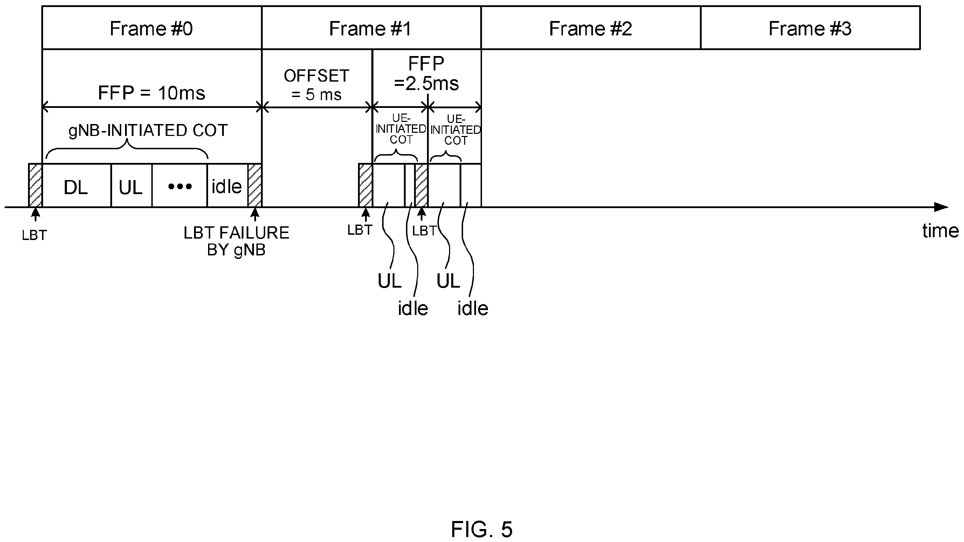

Fig. 5 is a diagram illustrating another example of the UE-initiated COT. In the example of Fig. 5, the first FFP (FFP for gNB-initiated COT) is included in the frame #0, and the second FFP (FFP for UE-initiated COT) is included in the frame #1. The first FFP in Fig. 5 is the same as that in Fig. 2.

In the example illustrated in Fig. 5, the offset (here, 0.5 ms) of the starting position of the second FFP is configured/notified to the UE by a specific higher layer parameter (information on starting position of second FFP). In addition, in the case of the UE to which the cycle of the second FFP (period, here, 2.5 ms) is configured/notified, the UE obtains the second COT 0.5 ms after the starting position of the frame #1 by a specific higher layer parameter (information on cycle of second FFP). The UE performs channel sensing in a specific period immediately before the start of the second COT. When the sensing is successful, the UE may transmit and receive the signal/channel immediately after the sensing. After transmitting and receiving the signal/channel, the UE may perform channel sensing through a specific idle period.

According to the embodiment 1-4, more flexible transmission and reception of the UL signal/channel becomes possible, higher reliability of communication can be ensured, and communication can be restarted more quickly after LBT failure by the UE/gNB.

As described above, according to the first embodiment, an appropriate UE-initiated COT can be configured.

### <Second Embodiment>

In a second embodiment, a method of applying the second COT to the UL signal/channel will be described. The UE may use the second COT when transmitting the UL signal/channel in accordance with at least one of the embodiments 2-1 and 2-2 described below. The operation of the second COT may be any method described in the first embodiment.

### [Embodiment 2-1]

The UE may configure the second COT in common to a plurality of (for example, all) UL signals/channels and transmit the UL signals/channels.

The plurality of UL signals/channels may be at least one of a PUCCH/PUSCH/PRACH/SRS configured by a higher layer parameter, a PUCCH/PUSCH/PRACH/SRS triggered/scheduled by a DCI, and a PUSCH scheduled by a RAR UL grant.

At this time, the information on the starting position of the second FFP (COT) and the information on the cycle of the second FFP (COT) may be notified/configured to the UE by higher layer signaling (for example, SIB1 signaling/RRC signaling).

According to the embodiment 2-1, the UE-initiated COT can be configured to a plurality of UL signals/channels in common, and an increase in signaling overhead can be suppressed.

### [Embodiment 2-2]

The UE may configure the second COT independently for each UL signal/channel and transmit the UL signal/channel.

The UL signal/channel may be at least one of a PUCCH, a PUSCH, a PRACH, and an SRS which are configured by a higher layer parameter. At this time, at least one of the information on the starting position of the second FFP (COT) and the information on the cycle of the second FFP (COT) may be notified/configured to the UE by higher layer signaling (for example, SIB1 signaling/RRC signaling).

Further, the plurality of UL signals/channels may be at least one of the PUCCH, the PUSCH, the PRACH, and the SRS triggered/scheduled by the DCI. At this time, at least one of the set of information on the starting position of the second FFP (COT) and the set of information on the cycle of the second FFP (COT) may be notified/configured to the UE by higher layer signaling (for example, SIB1 signaling/RRC signaling), and the UE may determine the value of the starting position/cycle based on a value of a specific field included in the trigger/schedule DCI.

Further, the plurality of UL signals/channels may include the PUSCH scheduled by the RAR UL grant. At this time, at least one of the set of information on the starting position of the second FFP (COT) and the set of information on the cycle of the second FFP (COT) may be notified/configured to the UE by higher layer signaling (for example, SIB1 signaling/RRC signaling), and the UE may determine the value of the starting position/cycle based on a value of a specific field included in the RAR UL grant.

According to the embodiment 2-2, the second COT can be determined for each UL signal/channel, thereby enabling more flexible communication.

### <Third Embodiment>

In a third embodiment, a method of applying the second COT to a plurality of UEs included in a certain serving cell will be described. The UE may use the second COT when transmitting the UL signal/channel in accordance with at least one of the embodiments 3-1 and 3-2 described below. The operation of the second COT may be any method described in the first embodiment.

### [Embodiment 3-1]

The UE may configure the second COT in common to a plurality of (for example, all) UEs included in a certain serving cell and transmit the UL signal/channel. In other words, the UE may assume that information on the second FFP (COT) is notified in common to the plurality of UEs in the serving cell.

At this time, the information (for example, at least one of information on starting position of second FFP (COT) and the information on the cycle of the second FFP (COT)) on the second FFP (COT) configured to the UE may be notified to the UE by higher layer signaling (for example, SIB1 signaling/RRC signaling).

Further, the information on the second FFP (COT) configured to the UE may be instructed to the UE by physical layer signaling (for example, group-common PDCCH).

According to the embodiment 3-1, the UE-initiated COT can be commonly configured to the plurality of UEs included in the serving cell, and an increase in signaling overhead can be suppressed.

### [Embodiment 3-2]

The UE may configure the second COT and transmit the UL signal/channel independently for each UE included in the serving cell. In other words, the UE may assume that the information on the second FFP (COT) is notified independently for each UE in the serving cell.

At this time, the information (for example, at least one of information on starting position of second FFP (COT) and information on cycle of second FFP (COT)) on the second FFP (COT) configured to the UE may be notified/configured/instructed to the UE by higher layer signaling (for example, RRC signaling) and physical layer signaling (for example, DCI).

According to the embodiment 3-2, the second COT can be determined for each UE included in the serving cell, and more flexible communication can be performed.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

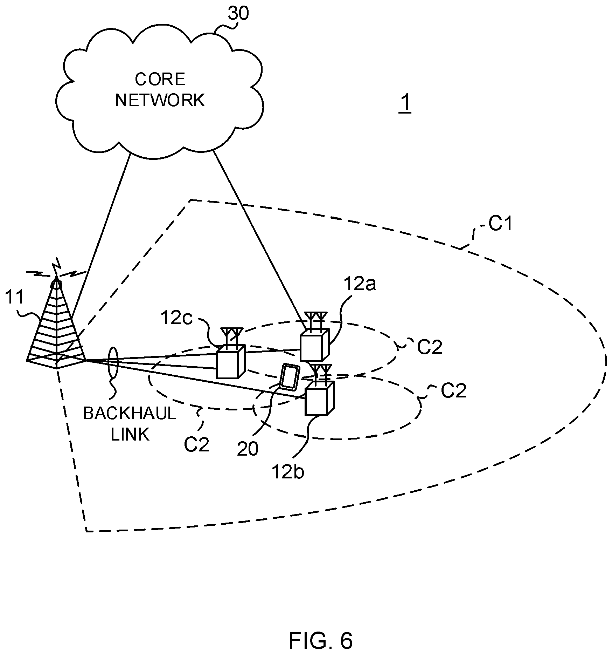

Fig. 6 is a diagram illustrating an example of a schematic configuration of a radio communication system according to one embodiment. A radio communication system 1 may be a system configured to implement communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, the NR base station (gNB) is the MN, and the LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 configured to form a macro cell C1 with a relatively wide coverage, and base stations 12 (12a to 12c) disposed within the macro cell C1 and configured to form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) or a second frequency range (frequency range 2 (FR2)). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) and frequency division duplex (FDD).

The plurality of base stations (for example, RRHs) 10 may be connected by wire (for example, optical fiber, X2 interface, or the like in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), and a next generation core (NGC).

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Further, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI configured to schedule the PDSCH may be referred to as DL assignment, DL DCI, or the like, and the DCI configured to schedule PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource configured to search for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble configured to establish connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

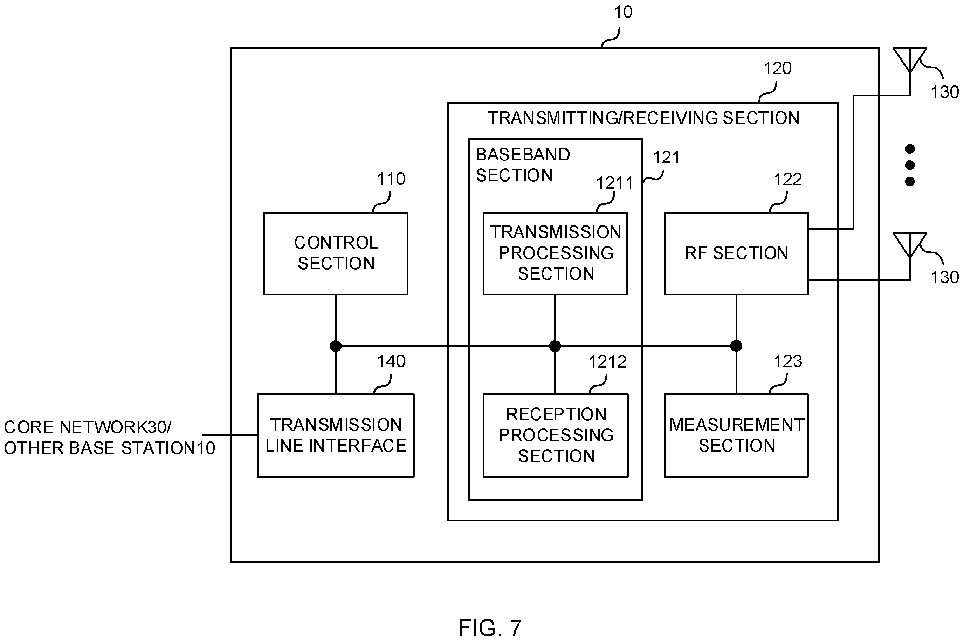

Fig. 7 is a diagram illustrating an example of a configuration of a base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may be implemented by the reception processing section 1212, the RF section 122, and the measurement section 123.

The transmission/reception antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit user data (user plane data), control plane data, and the like for the user terminal 20.

Note that the transmitting section and the receiving section of the base station 10 in the present disclosure may include at least one of the transmitting/receiving section 120, the transmission/reception antenna 130, and the transmission line interface 140.

The transmitting/receiving section 120 may transmit information on channel occupancy time (COT) in a semi-static channel access procedure. The control section 110 may control the reception of the uplink channel in the COT initiated based on the information on the COT (first embodiment).

### (User Terminal)

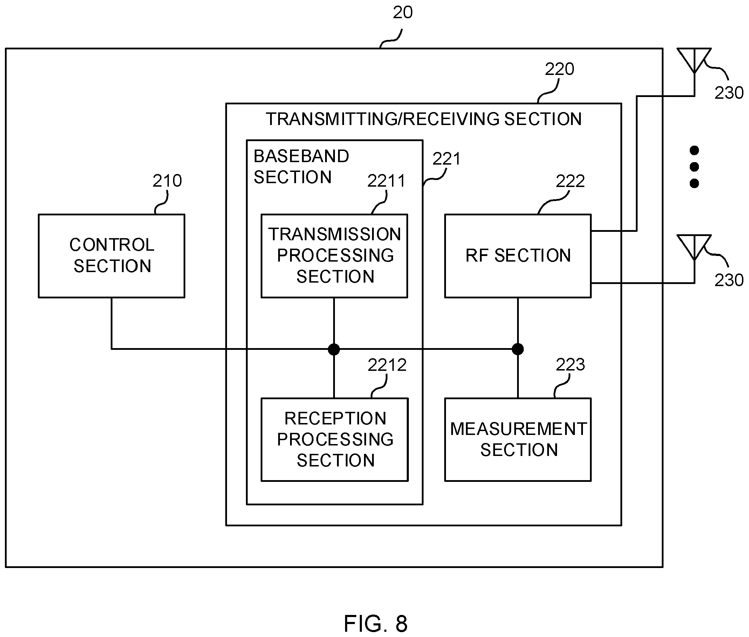

Fig. 8 is a diagram illustrating an example of a configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform, and otherwise, DFT processing may not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 and the transmission/reception antenna 230.

The transmitting/receiving section 220 may receive the information on the channel occupancy time (COT) in the semi-static channel access procedure. The control section 210 may control the initiative of the COT based on the information on the COT (first embodiment).

The information on the COT may be at least one of the information on the starting position of the periodic channel occupancy (PCO) including the COT and the information on the period of the PCO including the COT (first embodiment).

The control section 210 may control the initiative of the COT in common to a plurality of uplink (UL) channels or independently for each UL channel (second embodiment).

The control section 210 may assume that the information on the COT is notified in common to a plurality of terminals in the serving cell or independently for each terminal in the serving cell (third embodiment).

### (Hardware Configuration)

Note that the block diagrams that have been used to describe the above embodiments illustrate blocks in functional units. These functional blocks (components) may be implemented in any combinations of at least one of hardware and software. Further, the method of implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be implemented by combining the one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

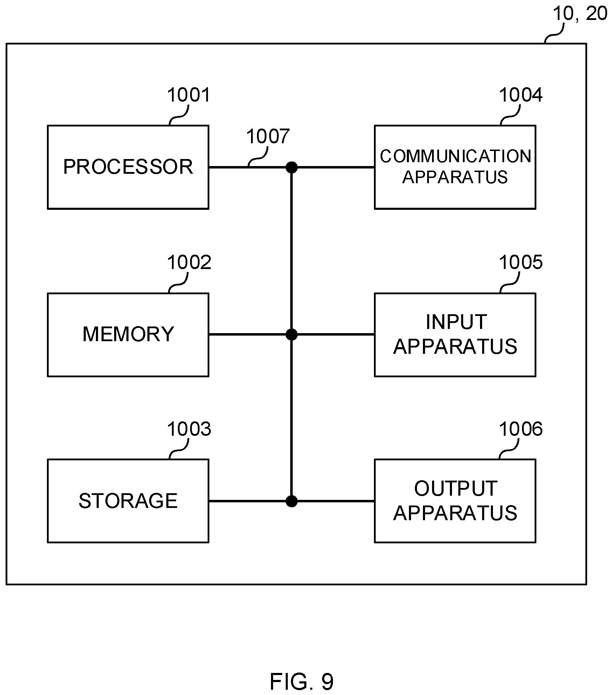

For example, the base station, the user terminal, and the like according to one embodiment of the present disclosure may function as a computer configured to execute the processing of the radio communication method of the present disclosure. Fig. 9 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be read as interchangeable with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading given software (program) onto hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and the like from at least one of the storage 1003 and the communication apparatus 1004 into the memory 1002, and executes various processing according to these. As the program, a program that causes a computer to execute at least a part of the operation described in the above-described embodiment is used. For example, the control section 110 (210) may be implemented by control programs stored in the memory 1002 and configured to operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmission/reception device) for performing inter-computer communication via at least one of a wired network and a radio network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device configured to receive input from the outside (for example, a keyboard, a mouse, a microphone, a switch, a button, a sensor and the like). The output apparatus 1006 is an output device configured to perform output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and the like are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented using the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated to an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transmitter/receiver in the frequency domain, specific windowing processing performed by a transmitter/receiver in the time domain, and the like.

The slot may include one or more symbols in the time domain (orthogonal frequency division multiplexing (OFDM) symbols, single carrier frequency division multiple access (SC-FDMA) symbols, and the like). Further, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as PDSCH (PUSCH) mapping type A. A PDSCH (or PUSCH) transmitted using the mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be read as interchangeable with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. Note that the unit representing the TTI may be referred to as a slot, a mini slot and so on, instead of a subframe.

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTI is not limited to this.

The TTI may be a transmission time unit such as a channel-coded data packet (transport block), a code block, a codeword, or the like, or may be a processing unit such as scheduling or link adaptation. Note that when TTI is given, a time interval (for example, the number of symbols) in which the transport blocks, the code blocks, the codewords, and the like are actually mapped may be shorter than TTI.

Note that, when one slot or one mini slot is referred to as a TTI, one or more TTIs (that is, one or more slots or one or more mini slots) may be the minimum time unit of scheduling. Further, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, and the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more continuous subcarriers in the frequency domain. The number of subcarriers included in the RB may be the same regardless of the numerology, and may be twelve, for example. The number of subcarriers included in the RB may be determined based on numerology.

Further, an RB may include one or more symbols in the time domain, and may be one slot, one mini slot, one subframe or one TTI in length. One TTI, one subframe, and the like may each include one or more resource blocks.

Note that one or more RBs may be referred to as a physical resource block (physical RB(PRB)), a sub-carrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of continuous common resource blocks (RBs) for a certain numerology in a certain carrier. Here, the common RB may be specified by the index of the RB based on a common reference point of the carrier. A PRB may be defined in a certain BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that, a "cell", a "carrier", and the like in the present disclosure may be read as interchangeable with a "BWP".

Note that the structures of radio frames, subframes, slots, mini slots, symbols and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, a radio resource may be specified by a predetermined index.

Names used for, for example, parameters in the present disclosure are in no respect limitative. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not limitative names in any respect.

The information, signals, and the like described in the present disclosure may be represented using a variety of different technologies. For example, data, instructions, commands, information, signals, bits, symbols and chips, all of which may be referenced throughout the hereincontained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals, and the like may be input and output via a plurality of network nodes.

The information, signals, and the like that are input and/or output may be stored in a specific location (for example, in a memory), or may be managed in a control table. The information, signals, and the like to be input and output can be overwritten, updated, or appended. The output information, signals, and the like may be deleted. The information, signals and the like that are input may be transmitted to other pieces of apparatus.

Notification of information may be performed not only using the aspects/embodiments described in the present disclosure but also using another method. For example, the notification of information in the present disclosure may be performed using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, notification of predetermined information (for example, notification of information to the effect that "X holds") does not necessarily have to be sent explicitly, and can be sent implicitly (for example, by not performing notification of the predetermined information or by performing notification of another piece of information).

Decisions may be made in values represented by 1 bit (0 or 1), may be made in Boolean values that represent true or false, or may be made by comparing numerical values (for example, comparison against a predetermined value).

Software, regardless whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Additionally, software, instructions, information and the like may be transmitted and received via communication media. For example, when software is transmitted from a website, a server, or another remote source using at least one of a wired technology (coaxial cable, optical fiber cable, twisted pair, digital subscriber line (DSL), or the like) and a radio technology (infrared rays, microwaves, and the like), at least one of the wired technology and the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and mobile station may be called as a transmitting apparatus, a reception apparatus, a radio communication apparatus, and the like. Note that at least one of the base station and the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Further, the base station in the present disclosure may be read as interchangeable with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicleto-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be read as interchangeable with a side channel.

Likewise, the user terminal in the present disclosure may be read as interchangeable with the base station. In this case, the base station 10 may be configured to have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments described in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, although various methods have been illustrated in the present disclosure with various components of steps using exemplary orders, the specific orders that are illustrated herein are by no means limitative.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and the like as used in the present disclosure does not generally limit the number/quantity or order of these elements. These designations can be used in the present disclosure, as a convenient way of distinguishing between two or more elements. In this way, reference to the first and second elements does not mean that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, to "determine" as used herein may be interpreted to mean making determinations related to receiving (for example, receiving information), transmitting (for example, transmitting information), inputting, outputting, accessing (for example, accessing data in a memory) and so on.

In addition, to "determine" as used herein may be interpreted to mean making determinations related to resolving, selecting, choosing, establishing, comparing and so on. In other words, to "determine" as used herein may be interpreted to mean making determinations related to some action.

In addition, "determine" as used herein may be read as interchangeable with "assuming", "expecting", "considering", or the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be read as interchangeable with "access".

As used in the present disclosure, when two elements are connected, these elements may be considered "connected" or "coupled" to each other using one or more electrical wires, cables, printed electrical connections, and the like, and, as a number of non-limiting and non-inclusive examples, using electromagnetic energy having wavelengths in the radio frequency domain, the microwave region, and the optical (both visible and invisible) region, or the like.

In the present disclosure, the phrase "A and B are different" may mean "A and B are different from each other". Note that the phrase may mean that "A and B are different from C". The terms such as "separated", "coupled", and the like may be similarly interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Thus, the description of the present disclosure is for the purpose of explaining examples and does not bring any limiting meaning to the invention according to the present disclosure.

## Claims

1. A terminal comprising:
a receiving section configured to receive information on channel occupancy time (COT) in a semi-static channel access procedure; and
a control section configured to control initiative of the COT based on the information on the COT.

2. The terminal according to claim 1, wherein the information on the COT is at least one of information on a starting position of periodic channel occupancy (PCO) including the COT and information on a period of the PCO including the COT.

3. The terminal according to claim 1, wherein the control section controls the initiative of the COT in common to a plurality of uplink (UL) channels or independently for each UL channel.

4. The terminal according to claim 1, wherein the control section assumes that the information on the COT is notified in common to a plurality of terminals in a serving cell or independently for each terminal in the serving cell.

5. A radio communication method of a terminal, the method comprising:
receiving information on channel occupancy time (COT) in a semi-static channel access procedure; and
controlling initiative of the COT based on the information on the COT.

6. A base station comprising:
a transmitting section configured to transmit information on channel occupancy time (COT) in a semi-static channel access procedure; and
a control section configured to control reception of an uplink channel in the COT initiated based on the information on the COT.
